(19) **Europäisches Patentamt / European Patent Office / Office européen des brevets**

(11) **EP 4 779 347 A1**

(12) # EUROPEAN PATENT APPLICATION

(43) Date of publication:
**22.07.2026 Bulletin 2026/30**

(21) Application number: **25152554.9**

(22) Date of filing: **17.01.2025**

(51) International Patent Classification (IPC):
**G01S 5/02** [(2010.01)]  **G06N 3/08** [(2023.01)]
**H04W 4/02** [(2018.01)]  **H04W 12/06** [(2021.01)]

(52) Cooperative Patent Classification (CPC):
**G01S 5/0278; G06N 3/045; G06N 3/08; G06N 7/01; G06N 20/00; H04W 12/06; H04W 12/63**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Vestel Elektronik Sanayi ve Ticaret A.S.**
**45030 Manisa (TR)**

(72) Inventors:
- **AMMAR BOUDJELAL, Ayoub**
  **45030 Manisa (TR)**
- **AYGÜL, Mehmet Ali**
  **45030 Manisa (TR)**
- **ARSLAN, Hüseyin**
  **45030 Manisa (TR)**

(74) Representative: **Grünecker Patent- und Rechtsanwälte**
**PartG mbB**
**Leopoldstraße 4**
**80802 München (DE)**

(54) ## JOINT LOCALIZATION AND AUTHENTICATION

(57) Some embodiments in the present disclosure relate to a wireless communication system for joint localization and authentication. In particular, the system comprises a plurality of base stations configured to perform channel state estimation of a communication channel for wireless communication with a communication apparatus. The system further comprises a processing apparatus configured to generate an input instance using a result of the channel state estimation; and determine a position and an authentication state of each of the at least one communication apparatus using a machine learning model and the generated input instance, the machine learning model being trained to output a position and an authentication state using an input instance generated using a result of channel state estimation.

**Fig. 2**

**Description**

The present disclosure relates to a wireless communication system for joint localization and authentication. In particular, the present disclosure provides methods for such a wireless communication system and applications for an artificial intelligence (AI) system.

BACKGROUND

Wireless communication has been advancing over several decades now. Exemplary notable standards organizations include the 3rd Generation Partnership Project (3GPP) and IEEE 802.11, commonly referred to as Wi-Fi.

Artificial Intelligence and Machine Learning (AI/ML) are transforming industries by enhancing system performance, efficiency, and user experience. These technologies have gained significant traction in the telecommunications industry, particularly in mobile networks. The integration of AI/ML is paving the way for innovative business models, advanced use cases, and optimized operations, especially within the realm of 5G and next-generation mobile networks.

Recent advances in modern factories, such as the industrial Internet of Things (IoT), have allowed the emergence of automated guided vehicles (AGV). Such AGV requires extremely precise positioning in real-time.

5G is designed to address the requirements and needs of industrial verticals. Traditional positioning algorithms, such as angle of arrival (AoA) and time difference of arrival (TDoA), do not meet the advanced requirements of 5G and future communications systems. To enhance positioning accuracy, AI/ML solutions were explored as a use case of AI for the New Radio (NR) air interface in 3GPP TR 38.843, "Technical Specification Group Radio Access Network; Study on Artificial Intelligence (AI)/Machine Learning (ML) for NR air interface (Release 18)" 3rd Generation Partnership Project; Technical Specification Group Radio Access Network.

In AI/ML-based positioning, channel measurements taken at a transmission reception point (TRP) or a user equipment (UE) may serve as network inputs, while the output may be the 2D position estimate of the UE, defining the task as a regression problem. Channel measurements, commonly referred to as channel state information (CSI), may exhibit temporal and spatial variations due to multipath propagation, mobility and environmental factors. Channel measurement-based images visually represent the channel characteristics over time, frequency, and/or space. The images may differ from those in typical image classification and regression tasks because they are not easily interpretable by humans, highlighting the importance of AI/ML networks in uncovering latent features that correlate with the UE's location.

Security on the other hand is a critical issue in wireless applications when people rely on wireless networks for transmission of important/private information, such as credit card transactions or banking related data communications. Therefore, the ability to share secret information reliably in the presence of adversaries is of utmost important. Adversaries may attempt to launch various attacks to gain unauthorized access to and modify the information, or even disrupt the information flows.

Most commonly used security methods rely on cryptographic techniques, such as the Data Encryption Standard (DES), employed at the upper layers of a wireless network, requiring a secure channel to share private keys. However, instead of using an additional channel, physical layer methods can be employed to distribute secret keys among multiple users, to supply location privacy and to supplement upper-layer security algorithms (e.g. Shiu, Y.S., Chang, S.Y., Wu, H.C., Huang, S.C.H. and Chen, H.H., 2011. Physical layer security in wireless networks: A tutorial. IEEE Wireless Communications, 18(2), pp.66-74). Moreover, a physical layer-based security (PLS) approach can be used where the lower layer can be utilized to secure the communication/sensing link.

In view of the above, it is desirable to improve wireless communication methods and systems in order to enhance localization accuracy and security measures to be more robust against interference.

SUMMARY

Methods and techniques, as well as the corresponding devices are provided, facilitating joint localization and authentication in wireless communication systems.

The present disclosure may improve both the security and operational efficiency of wireless networks, which are key considerations in the development of wireless communication standards. By addressing these critical aspects, the disclosure contributes to the overall advancement and optimization of wireless networks.

The invention is defined by the independent claims. Some exemplary implementations are provided by the dependent claims.

According to an embodiment, a wireless communication system for joint localization and authentication is provided. The wireless communication system comprises a plurality of base stations configured to perform channel state estimation of at least one communication channel for wireless communication with at least one communication apparatus; The system further comprises a processing apparatus configured to generate an input instance using a result of the channel state estimation; and to determine a position and an authentication state of each of the at least one communication apparatus using a machine learning model and the generated input instance, the machine learning model being trained to output a position and an authentication state using an input instance generated using a result of channel state estimation.

According to another embodiment, a machine learning method is provided. The machine learning method comprises generating a plurality of input instances using a result of the channel state estimation of at least one communication channel for wireless communication by a plurality of base stations with at least one communication apparatus; generating a plurality of target output instances, each target output instance corresponding to one of the input instances, wherein each target output instance represents a position and an authentication state of a respective wireless communication apparatus; and training a machine learning model using the plurality of input instances and the plurality of target output instances as a training dataset.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter.

Further, although the described methods are primarily centered around certain radio access technologies and network structures like cellular networks, the proposed ideas and their variations can also be extended to other technologies and networks, including Bluetooth, ZigBee, 6G networks, 5G/New Radio (NR), Long-Term Evolution (LTE), LTE-Advanced, LTE-Advanced Pro, Internet of Things (IoT), Industrial IoT (IIoT), and narrowband IoT (NB-IoT). Therefore, the scope of this disclosure is not confined to the given examples.

BRIEF DESCRIPTION OF DRAWINGS

An understanding of the nature and advantages of various embodiments may be realized by reference to the following figures.

Fig. 1     is a block diagram illustrating a basic communication system;

Fig. 2     illustrates a general system model of a wireless communication system, to which embodiments of the present disclosure may be applied;

Fig. 3a     is a block diagram illustrating a configuration of a base station according to an embodiment;

Fig. 3b     is a block diagram illustrating a configuration of a communication apparatus;

Fig. 4     is a block diagram illustrating a machine learning method according to an embodiment;

Fig. 5     is a block diagram illustrating the application of the machine learning model according to an embodiment;

Fig. 6     illustrates the steps of a method for a wireless communication system according to an embodiment; and

Fig. 7     illustrates the steps of a machine learning method according to an embodiment.

DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter.

Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one". Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

## Exemplary wireless system

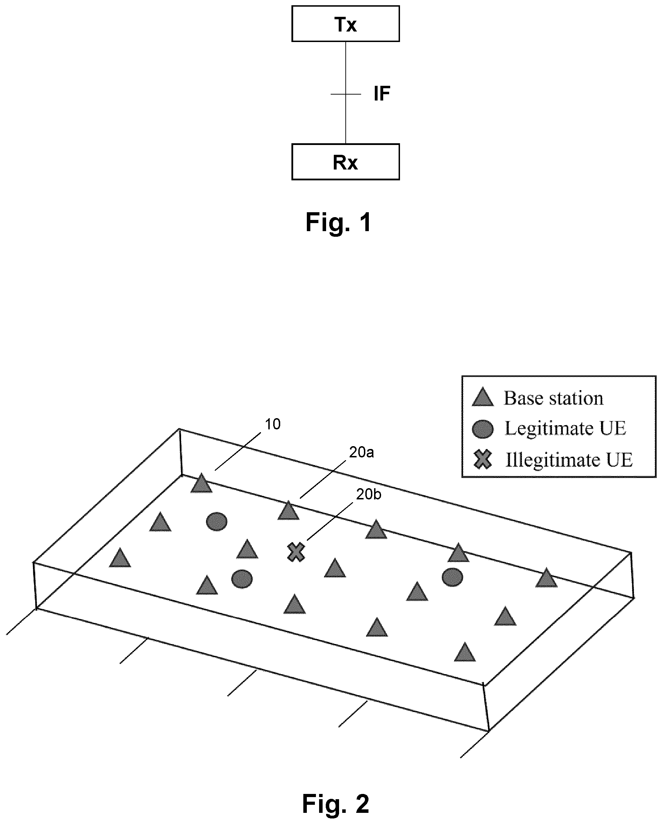

Fig. 1 illustrates an exemplary wireless system in which Tx represents a transmitter and Rx represents a receiver of a wireless signal. The transmitter Tx is capable of transmitting a signal to the receiver Rx or to a group of receivers or to broadcast a signal over an interface IF. The interface may be any wireless interface. The interface may be specified by means of resources, which can be used for the transmission and the reception by the transmitter Tx and the receiver Rx. Such resources may be defined in one or more (or all) of the time domain, frequency domain, code domain, and space domain. It is noted that in general, a "transmitter" and a "receiver" may be also both integrated in the same device. In other words, the devices Tx and Rx in Fig. 1 may respectively also include the functionality of the Rx and Tx.

The present disclosure is not limited to any particular transmitter Tx, receiver Rx and/or interface IF implementation. However, it may be applied readily to some existing communication systems as well as to the extensions of such systems, or to new communication systems. Exemplary existing communication systems may be, for instance, the 5G New Radio (NR) in its current or future releases, and/or the IEEE 802.11 based systems such as the recently studied IEEE 802.11 be or the like. The wireless signal is not necessarily a communication signal in the sense that it does not necessarily carry out human or machine communication. It may be a sensing signal such as radar signal or sounding signal or any other kind of wireless signal. The communication signal may be a signal for communication and sensing (Joint Communication & Sensing).

The IEEE 802.11, commonly referred to as Wi-Fi, has been around for three decades and has become arguably one of the most popular wireless communication standards with billions of devices supporting more than half of the worldwide wireless traffic. The increasing user demands in terms of throughput, capacity, latency, spectrum, and power efficiency calls for updates or amendments to the standard to keep up with them. As such, Wi-Fi generally has a new amendment after every 5 years with its own characteristic features. In the earlier generations, the focus was primarily on higher data rates, but with ever-increasing density of devices, area efficiency has become a major concern for Wi-Fi networks. Due to this issue, the last (802.11 ax, 802.11 be) amendments have focused more on the efficiency issue.

## Localization based on Artificial Intelligence/Machine Learning Model

In telecommunications, AI/ML capabilities are applied across various domains, such as management (e.g., Management Data Analytics or MDA), core networks (e.g., Network Data Analytics Function or NWDAF), and radio access networks (e.g., RAN intelligence). These capabilities are increasingly standardized by 3GPP working groups, including Service and System Aspects (SA) and Radio Access Networks (RAN), to ensure their effective deployment and operation.

AI/ML models, once deployed, directly impact system behavior, making lifecycle management critical. This lifecycle includes four primary phases: training, emulation, deployment, and inference. Effective management ensures optimal performance and accountability throughout these phases. The training phase involves training and validating ML models to meet performance expectations, with provisions for retraining if necessary. In the emulation phase, ML models are tested in simulated environments to evaluate performance before deployment (optional step). Next, the trained models are loaded into the target systems for operational use, which is referred to as deployment phase. Finally, the deployed models perform inference tasks, delivering actionable insights, known as inference phase.

3GPP SA specifications and technical reports on positioning requirements across industry verticals suggests an accuracy target from tens of meters for emergency calls to a few decimeters within indoor factory and one decimeter for vehicle-to-everything (V2X) use cases. A few key enablers for precise positioning in 5G include millimeter-wave (mmWave) frequency bands, which enable wideband signals, beamforming, and precise angle estimation with multiple antennas. The 3GPP TR 38.901 standard ("Study on channel model for frequencies from 0.5 to 100 GHz." 3rd Generation Partnership Project; Technical Specification Group Radio Access Network) outlines various indoor factory (InF) scenarios, focusing on a factory hall characterized by differing clutter densities and transmitter/receiver (Tx/Rx) antenna heights.

Positioning algorithms, like AoA or TDoA, rely extensively on line of sight (LoS) channels. When non-line-of-sight (NLoS) paths dominate, these conventional methods are less effective. Improved positioning accuracy may be obtained by direct AI/ML positioning, in which the AI/ML model's inference yields the estimated UE position, or by AI/ML-assisted positioning, where the AI/ML output provides intermediate estimates, such as LoS/NLoS path identification, along with angular and timing estimates. One may integrate these estimates with additional AI/ML models or traditional methods to ascertain the UE position. Both direct and assisted positioning methods can improve positioning accuracy, each with their own tradeoffs in accuracy and computational complexity. The residual neural network (ResNet) architecture is favoured for constructing very deep networks with less complexity, making it popular in AI/ML-based positioning applications which may comprise high-dimensional patterns (TDOC R1-2305509, Samsung, "Evaluation on AI ML for Positioning ", 3GPP TSG RAN WG1 #113, Incheon, Korea, May 22nd - May 26th, 2023; TDOC R1-2305463, Oppo, "Evaluation methodology and preliminary results on AI/ML for positioning accuracy enhancement", 3GPP TSG RAN WG1 #113, Incheon, Korea, May 22nd - May 26th, 2023; B. Chatelier, V. Corlay, C. Ciochina, F. Coly and J. Guillet, "Influence of Dataset Parameters on the Performance of Direct UE Positioning via Deep Learning," 2023 Joint European Conference on Networks and Communications & 6G Summit (EuCNC/6G Summit), Gothenburg, Sweden, 2023, pp. 126-131, doi: 10.1109/EuCNC/6GSummit58263.2023.10188249).

*Physical layer security (PLS)*

Physical layer security (PLS) in wireless communication networks enhances security by exploiting the characteristics of the physical medium, rather than relying on traditional cryptographic methods. It utilizes properties such as noise, fading, multipath propagation, and interference to safeguard communication from eavesdroppers.

The fundamental principle is based on the disparity in the wireless channel between legitimate users and an illegitimate user. Since wireless channels are location-dependent, the signal characteristics perceived by a legitimate receiver may differ from those at a location of an illegitimate user. Techniques like artificial noise injection, beamforming, and channel state information (CSI) exploitation can further amplify this disparity.

For instance, by selectively transmitting information that only the legitimate receiver can decode (based on CSI), a system may ensures that an eavesdropper perceives the transmitted signal as noise. Additionally, secrecy rate metrics are used to quantify the rate at which information can be securely transmitted without interception.

Physical layer security is particularly advantageous in scenarios where traditional encryption is impractical, such as in IoT devices with limited computational resources or ultra-low latency applications. However, it complements cryptographic methods rather than replacing them, offering an additional layer of defense in wireless systems.

PLS technologies can offer multiple security techniques (Mitev, M., Chorti, A., Poor, H.V. and Fettweis, G.P., 2023. What physical layer security can do for 6G security. IEEE Open Journal of Vehicular Technology, 4, pp.375-388). Some particular and non-limiting examples include secrecy encoders for wiretap channels, privacy-preserving transmission, secret key generation from shared randomness, physical unclonable functions (PUFs) for device authentication and radio frequency (RF) fingerprinting based authentication.

Although effective to a certain extent, there may be significant challenges, especially when addressing the dual needs of accurate positioning and robust physical layer security (PLS) in wireless networks such as 5G and 6G. Some exemplary showstoppers for positioning and security are inadequate NLoS handling, limited multi-user localization, vulnerability to interference and security threats, dependence on extensive computational resources and integration challenges.

*Embodiments*

In the dynamic field of wireless communication, especially under the advanced standards such as 5G and 6G or WiFi, the twin pillars of positioning and security stand out due to their critical importance. The architecture of these networks involves multiple layers encompassing data transmission, processing, and user interaction, all orchestrated under sophisticated protocols designed to ensure not only efficient but also secure communications.

Positioning in these networks may be achieved through the processing of signals across multiple antennas employing methods like Angle of Arrival (AoA) and Time Difference of Arrival (TDoA). These techniques are pivotal for determining the precise location of a User Equipment (UE) within the network, and crucial for functionalities ranging from emergency services to complex industrial applications.

Fig. 2 illustrates a system model of a wireless communication system, to which embodiments of the present disclosure may be applied. In the illustrated system, a plurality ofbase stations 10 communicates with one or more communication apparatuses 20a and/or 20b. The base stations 10 are configured to perform channel state estimation of a communication channel for wireless communication with a communication apparatus 20a, 20b. The base stations 10 may be configured to communicate with each other in a wireless and/or wired manner.

Each of the base stations 10 and communication apparatuses 20a, 20b may be arranged in an environment. The environment may be an indoor environment or an outdoor environment. The environment may be a certain region within which the base stations and/or the communication apparatuses 20a, 20b are arranged. Further, a base station 10 may be an access point to serve a user equipment (example of communication apparatus) in the environment. A user equipment (which may be simply referred to as a user) may be a legitimate user 20a allowed to access the network through one or more of the base stations 10, or an illegitimate user 20b capable to perform any type of attacks. The legitimate user 20a may be a UE, a sensor, an IoT device, or the like. The illegitimate user 20b may be any device capable of transmitting wireless communication signals within the wireless communication system to perform any type of attacks. An illegitimate user may perform eavesdropping (intercepting data), jamming (disrupting signals), spoofing (impersonating legitimate devices), or denial-of-service (overloading the network). These attacks may compromise confidentiality, availability, and/or integrity in wireless communication networks. For example, a user 20a, 20b may be a UE, a sensor, a mobile phone, an IoT device, or the like.

In this respect, it is noted that the present disclosure is not limited to above-mentioned standards or any other specific implementation of a wireless communication system. Further, each of the communication apparatuses may be any wireless communication apparatus like a mobile station, an IoT device, a multi-link device or the like, provided that the base station may communicate with the communication apparatus in a wireless manner.

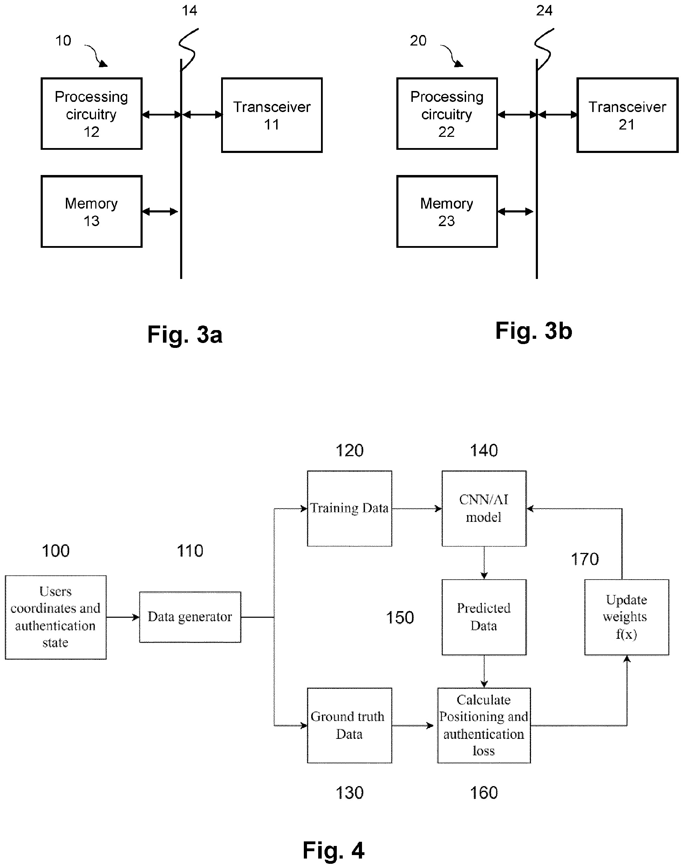

Figs. 3a and 3b illustrate block diagrams showing a configuration of a base station 10 and a communication apparatus 20, respectively, according to an embodiment.

The base station 10 comprises a transceiver 11 configured to communicate with a communication apparatus 20. That is, the base station 10 may use its transceiver 11 to transmit and/or receive signals to/from a communication apparatus 20. The base station 10 further comprises processing circuitry 12 configured to perform channel state estimation of a communication channel for wireless communication with the communication apparatus 20. The base station 10 may comprise, for example, a memory 13 for storing data, programs, and the like. For example, the memory 13 stores a program to be read by the processing circuitry 12, wherein the program, when executed by the processing circuitry 12, causes the processing circuitry 12 to perform respective operations. For example, the program may cause the processing circuitry 12 to perform above-described operations and control the transceiver 11 to execute respective operations.

The transceiver 11, the processing circuitry 12, and/or the memory 13 may communicate with each other via communication interface 14. The transceiver 11 may be controlled by the processing circuitry 12 to perform respective operations.

The base station 10 may be a wireless access point (WAP), a hotspot, a network node, a connection point, a Wi-Fi hub, or the like. The base station 10 may be a Wi-Fi-Router, a standalone access point, a Mesh access point, or the like.

The communication apparatus 20 comprises a transceiver 21 configured to communicate with a base station 10. That is, the communication apparatus 20 may use its transceiver 21 to transmit and/or receive signals to/from a base station 10. The communication apparatus 20 further comprises processing circuitry 22 configured to control the transceiver 21 to communicate with the base station 10.

The communication apparatus 20 may comprise, for example, a memory 23 for storing data, programs, and the like. For example, the memory 23 stores a program to be read by the processing circuitry 22, wherein the program, when executed by the processing circuitry 22, causes the processing circuitry 22 to perform respective operations. For example, the program may cause the processing circuitry 22 to perform respective operations and to control the transceiver 11 to execute respective operations.

The transceiver 21, the processing circuitry 22, and/or the memory 23 may communicate with each other via communication interface 24.

The communication apparatus 20 may be a wireless device, a wireless terminal, a wireless module, a wireless node, a wireless interface, or the like. The communication apparatus 20 may be a smartphone, a laptop, a Bluetooth device, a smartwatch, or the like.

The system model of Fig. 2 may comprise a network of base stations 10 designed to concurrently communicate between multiple UEs (example of communication apparatus 20). For this purpose, the base station 10 may communicate with each other in a wireless and/or wired manner. Further, the base stations may communicate with each other via another (external) device, which is not illustrated.

As mentioned above, a base station 10 in the communication system may perform channel state estimation. Channel state estimation is typically performed using various techniques to measure and/or predict the behavior of the communication channel, based on a received signal. The goal is to obtain Channel State Information (CSI), which represents the knowledge of the channel's properties at a particular instance of time.

In Wi-Fi systems, reference signals may be sent periodically by the base station 10. These are known to both the base station 10 and the communication apparatus 20, allowing the communication apparatus 20 to compare the received signal to the expected reference signal.

The communication apparatus 20 may use the reference signals to estimate the channel's characteristics, such as Channel Impulse Response (CIR). The communication apparatus 20 may then send feedback to the base station with the estimated Channel State Information (CSI). This can include details like the channel's frequency response or delay profile. Channel State Information (CSI) may refer to the detailed information about the wireless channel, including the channel's attenuation, delay, phase, and/or multipath components. In Wi-Fi, CSI may describe both time-domain characteristics (like CIR) and frequency-domain properties (like CFR).

The wireless communication system may further comprise a processing apparatus configured to generate an input instance using a result of the channel state estimation. The result of the channel state estimation may represent channel state information, CSI, exhibiting temporal and/or spatial variations, for example. The result of the channel state estimation may be further based on amplitude, phase and/or multipath delay of the communication channel.

The processing apparatus may be implemented as the processing circuitry 12 of any one of the base stations 10.

However, the processing apparatus may be realized by multiple processing circuitries 12 of respective multiple base stations, which cooperate via wireless and/or wired communication. In addition or alternatively, the processing apparatus may be a separate entity embodied, for example, by a computing device. For this purpose, the processing apparatus may be configured to communicate with the plurality of base stations 10. The communication may be performed in a wireless and/or wired manner.

The input instance may comprise a matrix or an image, indicating CSI like a channel impulse response, CIR, a channel frequency response, CFR, and/or a power delay profile, PDP, representing channel characteristics over time, frequency, and/or space. The matrix or image may reflect the physical shape, size, and/or other characteristics of the environment of the wireless communication system.

However, the input instance is not limited to said measures, and may be based on any measure related to Channel State Information, reflecting a property of the communication channel between the base station 10 and the communication apparatus 20, obtained by channel state estimation.

The generated input instance may be used in a machine learning (ML) model such that the processing apparatus is configured to determine a position and an authentication state of each of the communication apparatuses 20. The machine learning (ML) model may be trained to output a position and an authentication state using an input instance generated using a result of channel state estimation. In other words, the ML model is trained to simultaneously provide the authentication state and the position of one or more communication apparatuses 20 using a single input instance. The authentication state may indicate whether or not the respective communication apparatus 20 is allowed to access a wireless network via one of the base stations 10. The authentication state may differentiate between a legitimate user 20a (example of communication apparatus) and an illegitimate user 20b (example of communication apparatus).

Upon determination of an illegitimate user, a counter-measure may be taken. For example, the processing apparatus may output a warning, may inform each of the base stations of the presence of an illegitimate user, or the like. When an illegitimate user is detected within the network, the base station(s) may prohibit wireless communication with the illegitimate user, for example.

The ML model may be trained to provide the position as a two-dimensional map on which each communication apparatus 20 is represented by a two-dimensional distribution centered at the respective position. In other words, the ML model analyzes, for example, CSI to generate the two-dimensional map. On this map, each user (example of communication apparatus 20) is represented by a two-dimensional distribution. The map may represent the environment of the wireless communication system, as described above. For example, the map may be implemented as an image, e.g. a RGB image or black/white image, a matrix, or the like. The two-dimensional distribution may be a probabilistic or Gaussian distribution, mathematically described by:

$$f(x_1, x_2) = \frac{1}{2\pi |\Sigma|^{1/2}} \exp\left( -\frac{1}{2} \begin{bmatrix} x_1 - \mu_1 \\ x_2 - \mu_2 \end{bmatrix}^T \Sigma^{-1} \begin{bmatrix} x_1 - \mu_1 \\ x_2 - \mu_2 \end{bmatrix} \right)$$

$$(1)$$

In equation (1), $\mu_1$ and $\mu_2$ represent the user's coordinates, and $\Sigma$ the covariance matrix encoding spread and correlation of the two-dimensional distribution. Further, $|\Sigma|$ denotes the determinant of the covariance matrix which provides a scalar measure of the overall spread of the Gaussian distribution.

The spatial coordinates, $x_1$ and $x_2$, may be scaled as integer values based on the environment of the wireless communication system. If, for example, the map is implemented as an image, e.g. a RGB image or black/white image, a matrix, or the like, the integer values may be mapped to pixel indices, i.e. rows and columns.

The distribution represented by equation (1) is normalized in the sense that the integral over the spatial coordinates, $x_1$ and $x_2$, is equal to 1. That is, the area or volume bounded by the distribution's curve is fixed to 1. In this case, the authentication state, output by the ML model, may be indicated by the covariance matrix $\Sigma$ of the distribution, i.e. equation (1).

The distribution may be multiplied by an amplitude $A$. In this case, the amplitude $A$ represents the integral of the distribution function multiplied by $A$, i.e. $A = \int_{x_1, x_2} A \cdot f(x_1, x_2)$. The authentication state, output by the ML model, may be indicated by the amplitude $A$, in addition or instead of the indication of the authentication state by the covariance matrix $\Sigma$.

However, the distribution may be also normalized in the sense that the maximum value is fixed to 1. That is, the distribution may be defined as $\bar{f}(x_1, x_2) = f \big/ \max\limits_{x_1, x_2} f$. The distribution $\bar{f}$ may be multiplied by an amplitude $A$. In this case, the amplitude $A$ represents the maximum value of $A \cdot \bar{f}$. Similar to the above, the authentication state may be reflected by the amplitude and/or the covariance matrix.

That is, the authentication state may be reflected by the Gaussian distribution by means of its width/shape (covariance matrix Σ) and/or its amplitude *A*. For example, an illegitimate user may be associated with a higher amplitude of the respective Gaussian distribution than a legitimate user. Alternatively, an illegitimate user may be associated with a lower amplitude of the respective Gaussian than a legitimate user.

Further, an illegitimate user may be associated with different shape (i.e. a different covariance matrix) of the respective Gaussian distribution than a legitimate user. In an example of a diagonal covariance matrix having the same diagonal values (i.e. the 2D Gaussian exhibits the same width in both spatial directions), an illegitimate user may be associated with a larger spread of the Gaussian than a legitimate user or vice versa. In another example of an arbitrary covariance matrix, an illegitimate user may be associated with a larger value of the determinant of the covariance matrix, |Σ| (i.e. a larger overall spread of the Gaussian distribution), than a legitimate user or vice versa. In such a way, a single scalar quantity can be utilized to differentiate between an illegitimate and a legitimate user even in the case of an asymmetric spread.

It goes without saying that the present disclosure is not limited thereto, and the authentication state (legitimate/illegitimate) may be represented by any property of the Gaussian distribution or a combination thereof, provided that said property differs between an illegitimate and a legitimate user.

The unique Gaussian distribution assigned to authorized and unauthorized users may provide a clear differentiation between user authentication states. By leveraging this probabilistic representation, the system may enhance both its utility and security by precisely locating and distinguishing users based on their respective distributions.

The two-dimensional map may be represented by a two-dimensional image including at least two channels. The channel of each two-dimensional distribution may indicate the authentication state of a respective communication apparatus. Further, each channel may be represented by a color. In such a way, a color may indicate an authentication state, and thus one unique Gaussian distribution may be enough to indicate an authentication state by differentiating between different channels or colors.

In other words, the two-dimensional map may be an image, wherein each pixel may be associated with at least two values (for example, red/green/blue value). A Gaussian distribution is represented by first values for an illegitimate user and by second values for a legitimate user. For example, in a case where the map is an RGB image, an illegitimate/unauthorized user may be represented as a Gaussian distribution in the red channel, whereas a legitimate/authorized user is represented by a Gaussian distribution in the green channel.

However, the present disclosure is not limited thereto, and the AI/ML model may be trained to provide the position(s) and authentication state(s) of respective user(s) in a different format. For example, the position(s) may be output as coordinates of a predefined coordinate system and the authentication state(s) may be output as a bit value, indicating whether or not the respective user is authorized.

According to the present disclosure, multiple users (example of communication apparatus 20) may be localized simultaneously while enhancing security measures. For this purpose, the AI/ML component is specifically tailored to be robust against interference and is adept at identifying potential security threats in real-time. Such capabilities are indispensable for modern networks where the integration of high bandwidth and low latency is paramount. A system according to the present disclosure not only meets, but may exceed the evolving standards set by 3GPP, particularly in the realms of security and efficiency, thus setting a new benchmark for future wireless communication systems.

Fig. 4 illustrates the training of the ML model according to the present disclosure. A dataset including a plurality of positions (coordinates) of users and respective authentication states serves as the basis for the training of the ML model. The dataset may be predetermined or predefined. The dataset may be pre-obtained using a system model in the environment to be addressed by the ML model. Further, respective Channel State Information (e.g. CIR, CFR data) serves as input to the training method. A data generator 110 generates data using the users' coordinates, authentication state 100, and channel state information, the data being processed as training data 120 to serve as ground truth data 130 and as input instances for the ML/AI model 140, respectively. Specifically, the data generator 110 may process the input data so as to provide two-dimensional maps including Gaussian distributions at positions of respective users and indicating respective authentication states (as described above) as ground truth data. Further, the data generator 110 may process the input data, in particular results of channel state estimation, to provide input instances as training data. The ML model outputs predicted data 150 (a predicted two-dimensional map including Gaussian distributions), which are compared to the ground truth data 130 by calculating a positioning and authentication loss 160. Finally, the ML model's weights are updated 170 before starting the next iteration.

The training of the ML/AI model may be performed by one or more computational devices. For example, the data generation, the setup of ML/AI model, the calculation of positioning and authentication loss and the update of the weights of the ML/AI model may be performed by a computer.

The ML/AI model is not particularly limited, and may be a neural network like a convolutional neural network (CNN). Further, the training may include validation as well as fine-tuning. For this purpose, a separate validation dataset may be used to monitor the model's performance during training, in order to avoid overfitting (when the model memorizes training data but performs poorly on new data). Further, hyperparameters (e.g. learning rate) may be adjusted to fine-tune the model's performance.

In this way, a machine learning method is provided, comprising generating a plurality of input instances of a communication channel for wireless communication by a plurality of base stations 10 with a communication apparatus 20; generating a plurality of target output instances, each target output instance corresponding to an input instance, wherein each target output instance represents a position and an authentication state of a respective wireless communication apparatus 20; and training a ML model using the plurality of input instances and the plurality of target output instances as a training dataset.

The machine learning model may be a machine learning model using the plurality of input instances and the plurality of target output instances as a training dataset.

This system introduces a structured approach for user (example of communication apparatus) localization (positioning) and authentication. By integrating AI techniques with user coordinates and CSI (example of input instance), the system may accurately map user locations and differentiate between authorized and unauthorized users through two-dimensional Gaussian distributions.

Users' coordinates and authentication state 100 serve as the source of information regarding each user's coordinates within the specified coverage area (environment), mapped onto the two-dimensional plane. The coordinates may be represented as (x,y)-coordinates on a (x,y)-plane. However, the present disclosure is not limited to this representation, and the coordinates may be represented in any other coordinate system the person putting the disclosure into practice sees fit. Additionally, it provides data on the users' authentication state, where authorized or legitimate users 20a differentiate from unauthorized or illegitimate users 20b. The differentiation may be realized by assigning a distinct binary code or value to the authorized or legitimate users 20a, and another distinct binary code or value to the unauthorized or illegitimate users 20b. Further, the authentication state may be reflected by the Gaussian distribution by means of its width/shape (covariance matrix $\Sigma$) and/or its amplitude $A$.

The data generator 110 combines the information from the users' coordinates and authentication state 100 with the channel state information (CSI), a result of the channel state estimation, to generate two images. One image obtained using the CSI is used as an input instance for training the ML/AI model, while the other image (two-dimensional map) serves as ground truth data 130.

The ML/AI model may be a convolutional neural network (CNN) or a recurrent neural network (RNN). Ground truth data refers to accurately assigned and verified reference data utilized in machine learning systems to train, validate, or evaluate model performance. Hence, the ground truth represents the reference data, which is used to compute loss functions during the training process. In other words, ground truth data may represent known user coordinates and authentication states associated with known channel state information serving as a basis for the training input instances.

The training data 120 consist of channel state information matrices or images. These images may also be a result of any other channel state estimation, e.g. CFR, CIR, or the like and serve as the input instance for the ML/AI model during the training phase.

The generated ground truth data 130 may be produced based on empty images or matrices with zero entries throughout with dimensions corresponding to the real-world environment. In these images, two-dimensional Gaussian distributions are assigned to the coordinates of the users. Alternatively, the matrices, in which each entry may represent a user position or coordinate, are fed with Gaussian functions, equation (1), in their respective entry with respective information on the authentication state.

The ML/AI model 140 is trained to produce the desired output. The ML/AI model may be any type of neural network suitable for processing images of appropriate size, and it is responsible for generating output images that closely resemble the ground truth images. The selected model may be a convolutional neural network (CNN) since the convolution layers operations help to extract local spatial patterns from the input image. However, any other type of a ML/AI algorithm can be applicable without changing the main approach of the present disclosure.

The predicted or generated images 150 represent the images generated or predicted by the ML/AI model 140. These images comprising the respective location and authentication states are compared with the ground truth images to train the ML/AI model by updating respective weights.

The loss calculation function 160 is calculated by comparing the predicted/generated images with the original ground truth images. Two loss functions may be used: one to evaluate the similarity between the predicted and ground truth images, and another to assess the classification accuracy of the unique two-dimensional Gaussian distributions. The loss functions quantify the difference between the predicted/generated images and the true output images, guiding optimization during training.

The weight update function 170 is responsible for updating the model's weights after each iteration. The weight updates are guided by parameters such as optimizers and the learning rate, which dictate how the weights are adjusted with each iteration to improve model performance.

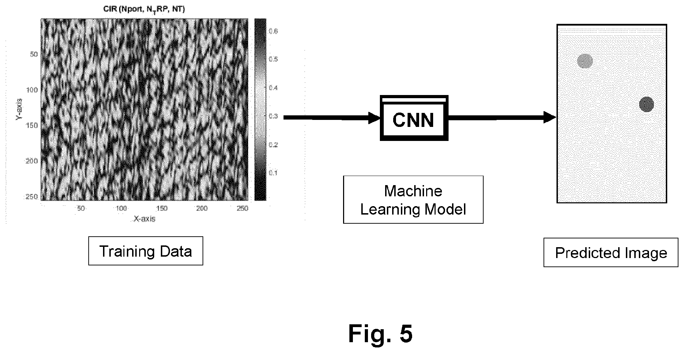

Fig. 5 illustrates the application of the ML model according to an embodiment. The ML model may be a convolutional neural network (CNN) and may use CSI, CIR, CFR, or the like as input instance. The ML model, once validated, may predict or generate an output image comprising each of the user's location and authentication state. In an exemplary embodiment, the authentication state may be indicated by different colors, each color representing a channel.

In the exemplary application illustrated in Fig. 5, an input instance is prepared using a result of channel state estimation performed by a plurality of base stations 10. In this example, the input instance is an image representing a channel impulse response, CIR. In the example, the x axis indicates time as consecutive time domain samples. The total number of time domain samples may be denoted by Nt. The y axis indicates a specific receiver antenna. The maximum number of this input dimension may be given by $N_{TRP} \times$ Nport, wherein $N_{TRP}$ is the number of transmit receive points, TRP, (e.g. a base station or an access point) and Nport is the number of transmit/receive antenna port pairs. That is the Channel Impulse Response is a function of Nport, $N_{TRP}$ and Nt, mathematically CIR(Nport, $N_{TRP}$, Nt). The value of the CIR may be normalized.

However, the present disclosure is not limited thereto, and the AI/ML model may be trained using any other input instance based of results of channel state estimation. The AI/ML model may be any other neural network capable to provide the position(s) and authentication state(s) of respective user(s) through training according to an embodiment as shown in Fig. 4. The output image may be any instance, which specifies a location and authentication state of users in a different format.

In such a way, a method for a wireless communication system for joint localization and authentication is provided, comprising performing channel state estimation of at least one communication channel for wireless communication with at least one communication apparatus; generating an input instance using a result of the channel state estimation; and determining a position and an authentication state of each of the at least one communication apparatus using a machine learning model and the generated input instance, the machine learning model being trained to output a position and an authentication state using an input instance generated using a result of channel state estimation.

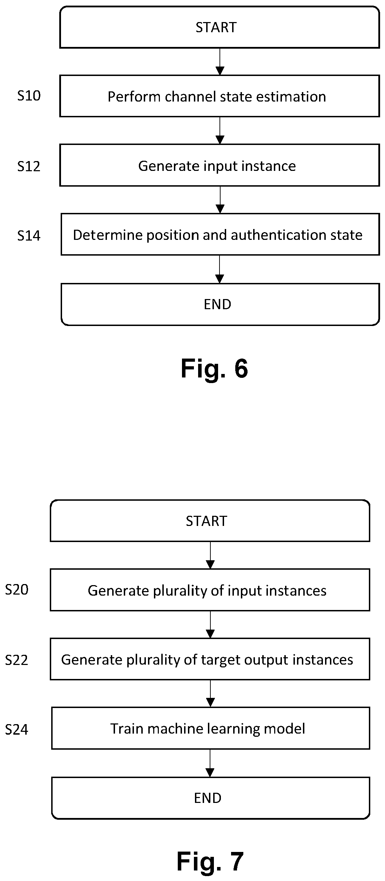

Fig. 6 illustrates the steps of a method for a wireless communication system for joint localization and authentication according to an embodiment. In step S10, a plurality of base stations 10 performs channel state estimation of at least one communication channel for wireless communication with at least one communication apparatus 20a, 20b. A result thereof is used to generate an input instance in step S12 by a processing apparatus. Said apparatus then determines in step S14 a position and an authentication state of each of the at least one communication apparatus 20a, 20b using a machine learning model and the generated input instance, the machine learning model being trained to output a position and an authentication state using an input instance generated using a result of channel state estimation.

Fig. 7 illustrates the steps of a machine learning method according to an embodiment. In step S20, a plurality of input instances is generated using a result of the channel state estimation of at least one communication channel for wireless communication by a plurality of base stations 10 with at least one communication apparatus 20a, 20b. In step S22, a plurality of target output instances is generated, each target output instance corresponding to one of the input instance, wherein each target output instance represents a position and an authentication state of a respective wireless communication apparatus 20a, 20b. Finally, in step S24 a machine learning model is trained using the plurality of input instances and the plurality of target output instances as a training dataset.

The present disclosure may be adapted for other applications such as beam management and initial access. By localizing multiple UEs simultaneously, the plurality of base stations 10 may directly generate the required beam for each UE, thereby reducing the need for the extensive beam selection process described in the beam management protocols. This targeted approach may streamline the initial access process, which is traditionally time-consuming due to beam sweeping as defined, for example, in 3GPP standards. As a result, the time required for initial access may be minimized, making the system more efficient, particularly in scenarios where multiple UEs are attempting to connect at once.

Furthermore, the system according to the present disclosure may enhance channel state information (CSI) estimation. By accurately identifying the position and corresponding parameters such as angle, the system may effectively mitigate interference from other users. This may lead to more precise channel estimation, ultimately improving the overall reliability and performance of the communication.

*Advantages achieved by the present disclosure*

According to the present disclosure, multiple UEs (examples of communication apparatuses 20) may be simultaneously localized. Unlike known systems that handle UE positioning independently, the present disclosure may localize multiple UEs at the same time. This capability is critical in dense environments where many users are present, which may lead to enhanced network scalability and efficiency.

Further, based on the present disclosure, positioning and security may be integrated by uniquely combining AI-based positioning with physical layer security (PLS) in a single structure without adding extra complexity to the system. This integration may enhance both the accuracy of positioning and the security of the network, providing a dual-layered solution ensuring that authorized users are identified while unauthorized users are simultaneously localized and marked as security threats.

Still further, the proposed wireless communication system may be robust against interference. The AI-driven model may be designed to handle interference by distinguishing between authorized and unauthorized users. This robustness may ensure that interference from unauthorized users or other sources does not degrade the performance of positioning and/or the quality of communication for legitimate users.

In addition, the disclosed approach may achieve proactive security measures based on location. Unlike known systems that limit actions to merely recognizing the authentication state of a user, the present disclosure may allow real-time security responses based on the precise location of unauthorized users. An authority may make the suitable decision and real action to stop the attacker since his location information is distinguished. Moreover, this capability may enable the system to dynamically adjust network parameters, isolate unauthorized users either by special domain separation or any other possible method or take specific actions depending on a threat level.

The proposed approach may also reduce complexity by merging both positioning and security functionalities into a single AI model and structure, the present disclosure may simplify the overall system design. This integration may eliminate the need for separate models and processes for positioning and security, resulting in lower computational complexity and faster processing. The unified approach may reduce system overhead while maintaining high accuracy and reliability, making it more efficient than known systems where positioning and security are handled independently.

Another advantage of the present disclosure may be efficient beam management and initial access. The present disclosure may streamline the initial access process by localizing multiple UEs simultaneously and directly generating the required beam for each UE, thus bypassing the extensive beam selection process typically described in 3GPP beam management protocols. This targeted approach may reduce the time required for initial access, making the system more efficient in scenarios with multiple UEs attempting to connect at once.

The proposed approach may further enhance channel state information estimation. By accurately identifying the position and corresponding parameters such as angle, the system may mitigate interference from other users. This may lead to more precise channel estimation, ultimately improving the overall reliability and performance of the communication.

In addition, simultaneous multi-user localization using CSI may be achieved. A primary advantage of the proposed system may be its ability to localize multiple users simultaneously by utilizing channel state information (CSI). This capability significantly may enhance the system's efficiency in environments with dense user populations.

*Implementations in software and hardware*

The methodologies described herein may be implemented by various means depending on the application. For example, these methodologies may be implemented in hardware, operation system, firmware, software, or any combination of two or all of them. For a hardware implementation, any processing circuitry may be used, which may include one or more processors. For example, the hardware may include one or more of application-specific integrated circuits (ASICs), digital signal processors (DSPs), digital signal processing devices (DSPDs), programmable logic devices (PLDs), field-programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer-readable storage medium or any other type of storage. The computer-readable media includes physical computer storage media, which may be any available medium that can be accessed by the computer, or, in general by the processing circuitry. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc, or the like. Combinations of different storage media are also possible - in other words, distributed and heterogeneous storage may be employed.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

*Selected embodiments and examples*

Summarizing, apparatuses, methods and techniques are described for a wireless communication system for joint localization and positioning, making use of a machine learning model to determine a position and an authentication state of a communication apparatus.

According to a first aspect, provided is a wireless communication system for joint localization and authentication. The wireless communication system comprises a plurality of base stations configured to perform channel state estimation of at least one communication channel for wireless communication with at least one communication apparatus. The system further comprises a processing apparatus configured to generate an input instance using a result of the channel state estimation; and to determine a position and an authentication state of each of the at least one communication apparatus using a machine learning model and the generated input instance, the machine learning model being trained to output a position and an authentication state using an input instance generated using a result of channel state estimation.

In an embodiment, the authentication state indicates whether or not the respective communication apparatus is allowed to access a wireless network via one of the base stations.

For example, the result of the channel state estimation represents channel state information, CSI.

For instance, the input instance comprises at least one of a matrix or an image, indicating a channel impulse response, CIR, a channel frequency response, CFR, and/or a power delay profile, PDP.

In an embodiment, the machine learning model is trained to provide the position as a two-dimensional map on which each communication apparatus is represented by a two-dimensional distribution centered at the respective position.

For example, the two-dimensional distribution is a two-dimensional Gaussian distribution.

In another embodiment, the authentication state is indicated by a covariance matrix and/or an amplitude of the Gaussian distribution.

In an embodiment, the two-dimensional map is a two-dimensional image including at least two channels; and the channel of each two-dimensional distribution indicates the authentication state of a respective communication apparatus.

In an embodiment, the channel state estimation is based on amplitude, phase and/or multipath delay of the at least one communication channel.

In an embodiment, the machine learning model is a machine learning model trained using a machine learning method according to a second aspect described below.

According to the second aspect, provided is a machine learning method. The machine learning method comprises generating a plurality of input instances using a result of the channel state estimation of at least one communication channel for wireless communication by a plurality of base stations with at least one communication apparatus; generating a plurality of target output instances, each target output instance corresponding to one of the input instances, wherein each target output instance represents a position and an authentication state of a respective wireless communication apparatus; and training a machine learning model using the plurality of input instances and the plurality of target output instances as a training dataset.

According to a third aspect, provided is a method for a wireless communication system for joint localization and authentication, comprising performing channel state estimation of at least one communication channel for wireless communication with at least one communication apparatus; and generating an input instance using a result of the channel state estimation; and determining a position and an authentication state of each of the at least one communication apparatus using a machine learning model and the generated input instance, the machine learning model being trained to output a position and an authentication state using an input instance generated using a result of channel state estimation.

In an embodiment, the authentication state indicates whether or not the respective communication apparatus is allowed to access a wireless network via one of the base stations.

For example, the result of the channel state estimation represents channel state information, CSI.

For instance, the input instance comprises at least one of a matrix or an image, indicating a channel impulse response, CIR, a channel frequency response, CFR, and/or a power delay profile, PDP.

In an embodiment, the machine learning model is trained to provide the position as a two-dimensional map on which each communication apparatus is represented by a two-dimensional distribution centered at the respective position.

For example, the two-dimensional distribution is a two-dimensional Gaussian distribution.

In another embodiment, the authentication state is indicated by a covariance matrix and/or an amplitude of the Gaussian distribution.

In an embodiment, the two-dimensional map is a two-dimensional image including at least two channels; and the channel of each two-dimensional distribution indicates the authentication state of a respective communication apparatus.

In an embodiment, the channel state estimation is based on amplitude, phase and/or multipath delay of the at least one communication channel.

In an embodiment, the machine learning model is a machine learning model trained using a machine learning method according to a second aspect described above.

According to a fourth aspect, provided is a non-transient computer-readable storage medium storing instructions, which, when executed by one or more computers, causes the one or more computers to perform any one of the methods described above.

According to a fifth aspect, provided is a computer program comprising instructions, which, when the program is executed by a computer, cause the computer to carry out the steps of any one of the methods described above.

Any of the apparatuses of the present disclosure may be embodied on an integrated chip.

Any of the above-mentioned embodiments and exemplary implementations may be combined.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims.

For example, it is to be understood that the presently disclosed subject matter contemplates that, to the extent possible, one or more features of any embodiment can be combined with one or more features of any other embodiment.

**Claims**

1. A wireless communication system for joint localization and authentication, comprising

   a plurality of base stations configured to perform channel state estimation of at least one communication channel for wireless communication with at least one communication apparatus; and
   a processing apparatus configured to

   generate an input instance using a result of the channel state estimation; and
   determine a position and an authentication state of each of the at least one communication apparatus using a machine learning model and the generated input instance, the machine learning model being trained to output a position and an authentication state using an input instance generated using a result of channel state estimation.

2. The wireless communication system according to claim 1, wherein
   the authentication state indicates whether or not the respective communication apparatus is allowed to access a wireless network via at least one of the base station.

3. The wireless communication system according to claim 1 or 2, wherein
   the result of the channel state estimation represents channel state information, CSI.

4. The wireless communication system according to any one of claims 1 to 3, wherein
   the input instance comprises at least one of a matrix or an image, indicating a channel impulse response, CIR, a channel frequency response, CFR, and/or a power delay profile, PDP.

5. The wireless communication system according to any one of claims 1 to 4, wherein
   the machine learning model is trained to provide the position as a two-dimensional map on which each communication apparatus is represented by a two-dimensional distribution centered at the respective position.

6. The wireless communication system according to claim 5, wherein
   the two-dimensional distribution is a two-dimensional Gaussian distribution.

7. The wireless communication system according to claim 6, wherein
   the authentication state is indicated by the covariance matrix and/or amplitude of the Gaussian distribution.

8. The wireless communication system according to any one of claims 5 to 7, wherein

   the two-dimensional map is a two-dimensional image including at least one channel; and
   the channel of each two-dimensional distribution indicates the authentication state of a respective communication apparatus.

9. The wireless communication system according to any one of claims 1 to 8, wherein
   the channel state estimation is based on amplitude, phase and/or multipath delay of the at least one communication channel.

10. A machine learning method, comprising

    generating a plurality of input instances using a result of the channel state estimation of at least one communication channel for wireless communication by a plurality of base stations with at least one communication apparatus;
    generating a plurality of target output instances, each target output instance corresponding to one of the input instances, wherein each target output instance represents a position and an authentication state of a respective wireless communication apparatus; and
    training a machine learning model using the plurality of input instances and the plurality of target output instances as a training dataset.

11. The wireless communication system according to any one of claims 1 to 9, wherein
the machine learning model is a machine learning model trained using a method according to claim 10.

12. A method for a wireless communication system for joint localization and authentication, comprising

performing channel state estimation of at least one communication channel for wireless communication with at least one communication; and
generating an input instance using a result of the channel state estimation; and
determining a position and an authentication state of each of the at least one communication apparatus using a machine learning model and the generated input instance, the machine learning model being trained to output a position and an authentication state using an input instance generated using a result of channel state estimation.

13. A non-transient computer-readable storage medium storing instructions which, when executed by one or more computers, causes the one or more computers to perform a method according to claim 10 or 12.

14. A computer program comprising instructions, which, when the program is executed by a computer, cause the computer to carry out the steps of the method according to claim 10 or 12.

Fig. 1

Fig. 2

14

10

| Processing circuitry 12 | Transceiver 11 |

| Memory 13 |

**Fig. 3a**

24

20

| Processing circuitry 22 | Transceiver 21 |

| Memory 23 |

**Fig. 3b**

120                    140

| Training Data | CNN/AI model |

100              110

| Users coordinates and authentication state | → | Data generator |

150

| Predicted Data |

170

| Update weights f(x) |

| Ground truth Data |

130

| Calculate Positioning and authentication loss |

160

**Fig. 4**

Fig. 5

S10　Perform channel state estimation

S12　Generate input instance

S14　Determine position and authentication state

**Fig. 6**

S20　Generate plurality of input instances

S22　Generate plurality of target output instances

S24　Train machine learning model

**Fig. 7**

Europäisches
Patentamt

European
Patent Office

Office européen
des brevets

# EUROPEAN SEARCH REPORT

**Application Number**

EP 25 15 2554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ST GERMAIN KEN ET AL: "Physical-Layer Authentication Using Channel State Information and Machine Learning", 2020 14TH INTERNATIONAL CONFERENCE ON SIGNAL PROCESSING AND COMMUNICATION SYSTEMS (ICSPCS), IEEE, 14 December 2020 (2020-12-14), pages 1-8, XP033872241, DOI: 10.1109/ICSPCS50536.2020.9310070 [retrieved on 2020-12-28] * abstract * | 1-14 | INV.<br>G01S5/02<br>G06N3/08<br>H04W4/02<br>H04W12/06 |
| A | STUDER CHRISTOPH ET AL: "Channel Charting: Locating Users Within the Radio Environment Using Channel State Information", IEEE ACCESS, vol. 6, 1 January 2018 (2018-01-01), pages 47682-47698, XP055842274, DOI: 10.1109/ACCESS.2018.2866979 Retrieved from the Internet: URL:https://ieeexplore.ieee.org/ielaam/628 7639/8274985/8444621-aam.pdf> * abstract * | 1-14 | |
| A | FOLIADIS ANASTASIOS ET AL: "Reliable Deep Learning based Localization with CSI Fingerprints and Multiple Base Stations", ICC 2022 - IEEE INTERNATIONAL CONFERENCE ON COMMUNICATIONS, IEEE, 16 May 2022 (2022-05-16), pages 3214-3219, XP034168791, DOI: 10.1109/ICC45855.2022.9838535 [retrieved on 2022-08-11] * abstract * | 1-14 | TECHNICAL FIELDS SEARCHED (IPC)<br><br>G01S<br>G06N<br>H04W |

-/--

The present search report has been drawn up for all claims

| Place of search | Date of completion of the search | Examiner |
|---|---|---|
| Munich | 10 June 2025 | Chindamo, Gregorio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 25 15 2554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG SHAOYU ET AL: "CSI-Based Physical Layer Authentication via Deep Learning", IEEE WIRELESS COMMUNICATIONS LETTERS, IEEE, PISCATAWAY, NJ, USA, vol. 11, no. 8, 7 June 2022 (2022-06-07), pages 1748-1752, XP011916571, ISSN: 2162-2337, DOI: 10.1109/LWC.2022.3180901 [retrieved on 2022-06-08] * abstract * ----- | 1-14 | |
| | | | TECHNICAL FIELDS SEARCHED (IPC) |

The present search report has been drawn up for all claims

| Place of search | Date of completion of the search | Examiner |
|---|---|---|
| Munich | 10 June 2025 | Chindamo, Gregorio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHIU, Y.S.** ; **CHANG, S.Y** ; **WU, H.C.** ; **HUANG, S.C.H.** ; **CHEN, H.H.** Physical layer security in wireless networks: A tutorial. *IEEE Wireless Communications*, 2011, vol. 18 (2), 66-74
- Study on channel model for frequencies from 0.5 to 100 GHz. *3GPP TR 38.901 standard*
- **SAMSUNG**. Evaluation on AI ML for Positioning. *3GPP TSG RAN WG1 #113, Incheon, Korea*, 22 May 2023
- **OPPO**. Evaluation methodology and preliminary results on AI/ML for positioning accuracy enhancement. *3GPP TSG RAN WG1 #113, Incheon, Korea*, 22 May 2023

- **B. CHATELIER** ; **V. CORLAY** ; **C. CIOCHINA** ; **F. COLY** ; **J. GUILLET**. Influence of Dataset Parameters on the Performance of Direct UE Positioning via Deep Learning. *2023 Joint European Conference on Networks and Communications & 6G Summit (EuCNC/6G Summit), Gothenburg, Sweden*, 2023, 126-131
- **MITEV, M.** ; **CHORTI, A.** ; **POOR, H.V.** ; **FETTWEIS, G.P.** What physical layer security can do for 6G security. *IEEE Open Journal of Vehicular Technology*, 2023, vol. 4, 375-388